# EUROPÄISCHE PATENTANMELDUNG

(11) **EP 3 391 739 A1**
(43) Veröffentlichungstag der Anmeldung: **24.10.2018**
(21) Anmeldenummer: 18000360.0
(22) Anmeldetag: 13.04.2018
(51) Int. Cl.: A01G 31/02

(54) **ALLSEITIG GESCHLOSSENER GEWÄCHSRAUM FÜR PFLANZEN**

(30) Priorität: 18.04.2017 DE 102017003712
(71) Anmelder: Nowak, Martin, 1100 Wien (AT)
(72) Erfinder: Nowak, Martin, 1100 Wien (AT)
(74) Vertreter: Dupal, Helmut

(57) **Zusammenfassung**

Gewächsraum für Pflanzen allseitig geschlossen, gegen Außenlicht abgedeckt mit einer gesteuerten Lichtquelle (2) und einer geregelten Luftwechsel-Konditioniervorrichtung (3), mit einem Rahmenaufbau (1) aus Formrohren, der mit einer Abdeckung aus Verkleidungsplatten (4) allseitig abgedeckt ist mit einer Zugangstüre (12) bei die Rahmenteile des Rahmenaufbaues (1) und die Verkleidungsplatten (4) mit einfach lösbaren Verbindungsmitteln (5) zusammensetzbar sind und der Zulufteintritt (6) im Bodenbereich und die Luftableitung im Deckenbereich angeordnet ist, die Lichtquelle (2) in einer geeigneten Lage für die Belichtung angeordnet ist und elektronische Sensoren für Leuchtdichte, Lufttemperatur, Luftfeuchtigkeit und den CO₂-Gehalt der Luft und zur Steuerung der Lichtquelle (2) und zur Regelung der Luftwechsel-Konditioniervorrichtung (3) im Gewächsraum angebracht sind wobei der Rahmenaufbau (1) aus einem Boden-Rahmenteil (8), einem Decken-Rahmenteil (9) und vier Wand-Rahmenteilen (10) besteht, die jeweils geschweißt erstellt und miteinander verschraubt sind und an denen von außen die Verkleidungsplatten (4) der Abdeckung mit einem Doppelseiten-Klebeband (11) oder mit Klebstoff befestigt sind.

## Beschreibung

Die Erfindung betrifft einen Gewächsraum für Pflanzen, allseitig geschlossen, mit den Merkmalen des Anspruches 1.

Solche Gewächsräume werden in kleinen Baugrößen hergestellt, die in anderen Gebäuden eingebaut werden oder zusammmengebaut ausgeliefert und mehrere nebeneinander aufgestellt.
Dadurch bestehen häufig Grenzen der Verwendbarkeit, wenn die Baugröße den Einbau erschwert oder verhindert. Bei mehreren nebeneinander aufgestellten Gewächsräumen muss jeder die gesamte erforderliche Installation besitzen.

Der Transport größerer Stückzahlen zu Lande wird durch die fertiggestellte Bauform verteuert und die Baugrößen sind begrenzt.

Dazu kommt, dass die Bauweise und Steuerung und Regelung der Betriebseinrichtungen die jeweils auftretenden oder bestehenden Bedürfnisse der gezogenen Pflanzen wechselnd berücksichtigen sollen und deswegen daran angepasst und einstellbar sein müssen und ein günstiger Energiebedarf eingestellt werden soll.

Aufgabe der Erfindung ist es, einen Gewächsraum in möglichst einfach aufgebauten, vorgefertigten Teilen in einfacher Weise zum Aufbauort zu transportieren, den Zusammenbau vor Ort an dessen Gegebenheiten angepasst vornehmen zu können und eine Erweiterung jederzeit mit einem gleichermaßen aufgebauten weiteren Gewächsraum mit einfachen Mitteln und Bauaufwand in gleicher Qualität vornehmen zu können.

Diese Aufgabe wird bei einem Gewächsraum nach den Merkmalen des Anspruches 1 gelöst.

Die weiteren Ansprüche betreffen jeweils wichtige ergänzende Merkmale der Erfindung im Einzelnen.

Für den Transport in Bauteilen, die ohne besonderen Aufwand zu handhaben und am Lieferort mit einfachen Montageschritten durch Anwendung von einfach lösbaren Verbindungsmitteln zusammengefügt werden können, sind Rahmenaufbau und Verkleidungsplatten aus mit Schrauben und Klebemitteln verbindbaren Bauteilen zu einem Gewächsraum zusammenbaubar hergestellt.

In dem gegen Außenlicht abgedeckten Gewächsraum ist die Lichtquelle in einer geeigneten Lage zur Beleuchtung der Pflanzen im Deckenbereich oder tiefer abgehängt bei Regalpflanzbehältern angeordnet.

Zu Herstellung eines für das Pflanzenwachstum günstigen Luftwechsel ist de Eintritt der Zuluft im Bodenbereich und der Austritt der Abluft mit einer Entlüftungsvorrichtung im Deckenbereich des Gewächsraumes eingerichtet.
Zum Betrieb sind elektronische Sensoren vorgesehen, mit denen Leuchtdichte, Lufttemperatur, Luftfeuchtigkeit und den CO₂-Gehalt der Luft zur Steuerung und zur Regelung der Lichtquelle, der Luftwechsel-Konditioniervorrichtung und der Luftableitung vorgesehen.

Um einen stabilen Aufbau des Gewächsraumes bei einem gleichzeitig rasch und einfach vorzunehmenden Zusammenbau zu ermöglichen besteht der Rahmenaufbau aus einem Boden-Rahmenteil, einem Decken-Rahmenteil und vier Wand-Rahmenteilen. Diese sind jeweils aus Formrohren geschweißt und werden miteinander verschraubt.

Die Verkleidungsplatten der Abdeckung sind dann außen an den Formrohren entweder mit einem Doppelseiten-Klebeband oder mit Klebstoff, der bevorzugt ein 2-komponenten-Klebstoff ist, befestigt.

Der Gewächsraum wird für den stabilen Stand besonders bei größeren Bauformen mit dem Boden-Rahmenteil direkt auf einem Betonfundament Bodenplatte oder Streifenfundament aufgesetzt und die Verkleidungsplatten innen auf dem Boden-Rahmenteil als Abdeckung aufgelegt.

Um die Temperaturhaltung zu erleichtern und den Energieaufwand dafür geringer zu halten, sind die Verkleidungsplatten der Abdeckung aus Dämmplatten, vorzugsweise aus Polyurethan-Schaumstoff mit Metallummantelung, insbesondere aus Stahlblech oder Aluminiumblech, sehr günstig als Paneelplatten ausgebildet, hergestellt, die mit Kunststoffbeschichtung geschützt sein können und die bei Verwendung mehrerer Platten an einem Rahmenteil untereinander mit eingebauten Verbindungsvorrichtungen fugendicht zusammenfügbar und fest fixierbar sind.

Ein wirksamer Luftwechsel bei unterschiedlicher Innentemperatur gegenüber der äußeren Umgebung und erhöhte CO₂-Gehalte der Raumluft erfordert die Abdeckung von Fugen zwischen den Verkleidungsplatten mit aufgetragener Dichtmasse oder mit Dichtungsbändern und die Einrichtung einer Zugangstüre und von Installationsdurchführungen mit luftdichten Dichtungen.

Eine wichtige Möglichkeit zur Vergrößerung des umschlossenen Raumes des Gewächsraumes besteht in dem durch den beschriebenen Aufbau nach Wegnahme der Abdeckung einer Seitenwand und zwar von Wand-Rahmenteil mitsamt den Verkleidungsplatten einen Gewächsraum gleicher oder ähnlicher anfügbarer Baugröße modulartig anzubringen und dies auch an drei Seiten und auch Gleichzeitig und damit die Kapazität der Lichtquelle, der Luftwechsel-Konditioniervorrichtung und der Entlüftungsvorrichtung des ersten Gewächsraumes mit zu benutzen.

Für eine wirksame Anwendung der Lichtquelle wird diese am Decken-Rahmenteil des Gewächsraumes angebracht, wobei deren Abstand zum Pflanzenbewuchs durch den Ort und Höhe des Anbrin gungsortes einstellbar ist, indem bei Pflanzungen an Wandkonsolen etwa das Abhängen von Leuchten auf tiefere Anbringungsstelle von Vorteil sein kann.

Die Berücksichtigung der Lichtansprüche der gezogenen Pflanzen kann durch eine programmierte Schaltung, auch von Mobilen Geräten aus hinsichtlich Leuchtdauer und Leuchtdichte erfolgen.
Die Lichtquelle kann eine Natriumdampflampen- oder besonders energiesparend eine LED-Lampen-Leuchtenanordnung sein.

Für eine umfassende Aufbereitung der zugeführten Frischluft Ist es notwendig die Luftwechsel-Konditioniervorrichtung mit Einrichtungen zur Förderung, Erwärmung, Kühlung, Be- und Entfeuchtung auszustatten, wobei es von Vorteil ist, den Lufteintritt im Bodenbereich des Gewächsraumes über einen Schlauch oder ein Rohr und die Luftableitung über eine Entlüftungsvorrichtung im Deckenbereich des Gewächsraumes vorzunehmen.

Zu der bei manchen Pflanzenarten notwendigen sehr genauen Steuerung oder Regelung der programmierbaren Schaltung ist für die Lichtquelle wenigstens einem Sensor zu Messung der Leuchtdichte und für die Luftwechsel-Konditioniervorrichtung jeweils ein Temperatursensor am Zulufteintritt und an der Entlüftungseinrichtung und jeweils ein Luftfeuchtigkeitssensor und ein CO₂-Sensor an diesen Stellen anzubringen.

Die Luftwechsel-Konditioniervorrichtung, die elektrische Einrichtung der Lichtquelle und die Entlüftungsvorrichtung werden, schon wegen der modularen Erweiterungsmöglichkeiten günstigerweise auf dem Decken-Rahmenteil des Gewächsraumes oder an einer der Seitenwände angebracht.

Vor Allem bei größeren Bauformen des Gewächsraumes ist auch eine Anordnung der vorgenannten Einrichtungen, wegen deren größerem Platzbedarf und/oder Gewicht, in einem anschließenden Nebenraum von Vorteil.

Gewächsräume der beschriebenen Bauform können von nach Bedarf hergestellt werden und liegen in der Dimension von Hallengröße, auch bedingt durch die Dimensionen der gezogenen Pflanzen.

Ein Ausführungsbeispiel der Erfindung ein Grundaufbau eines Gewächsraumes wird nachstehend an Hand der Zeichnung beschrieben.

Es zeigen:
- Fig. 1: Vorderansicht des Gewächsraumes mit der Zugangstüre, schematisch;
- Fig. 2: Vorderansicht des Gewächsraumes die Vorderwand entfernt;
- Fig. 3: Vorderansicht des Rahmenaufbaues des Gewächsraumes, schematisch;
- Fig. 4: Draufsicht auf den Gewächsraum, schematisch;
- Fig. 5: Draufsicht auf den Gewächsraum bei entferntem Decken-Rahmenteil, schematisch;
- Fig. 6: Draufsicht auf den Boden des Gewächsraumes, schematisch;
- Fig. 7: Draufsicht auf den Boden-Rahmenteil des Gewächsraumes, schematisch;
- Fig. 8: Seitenansicht auf den Gewächsraum mit der Verkleidungsplatte der Seitenwand, schematisch;
- Fig. 9: Seitenansicht auf den Gewächsraum die Seitenwand entfernt, schematisch;
- Fig. 10: Seitenansicht des Rahmenaufbaues des Gewächsraumes, schematisch;
- Fig. 11: Eck-Teilansicht des Rahmenaufbaues des Gewächsraumes, schematisch;
- Fig. 12: Ansicht von der Seite eines Rahmenteiles mit Abschnittansicht einer angeklebten erkleidungsplatte, schematisch;
- Fig. 13: Schrägansicht eines Rahmenteiles mit Schnittansicht einer Verkleidungsplatte mit Doppel-Klebeband angeklebt, schematisch;
- Fig. 14: Schrägansicht des Gewächsraumes, an der vorderen Ecke aufgerissen, schematisch;

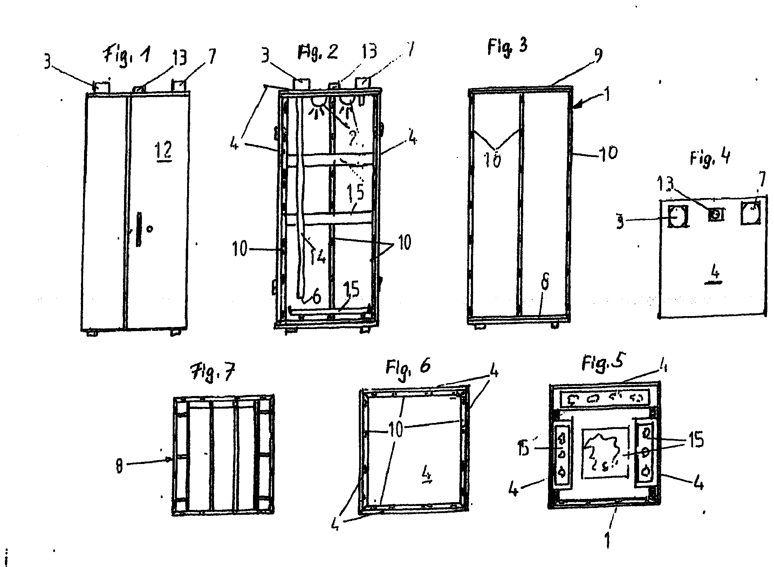

In Fig. 1 ist der Gewächsraum von vorne mit der Zugangstüre 12 geschlossen dargestellt und die auf der Abdeckung des Decken-Rahmenteils angebrachte Luftwechsel-Konditioniervorrichtung 3, die elektrische Einrichtung 13 für die Lichtquelle 2 und die Entlüftungsvorrichtung 7 nebeneinander.

Fig. 2 zeigt den Gewächsraum von vorne mit entfernter Zugangstüre 12, sodass darüberhinaus die Lichtquelle 2 sichtbar ist, ebenso wie der Rahmenaufbau 1 mit den Wand-Rahmenteilen 10 und den Verkleidungsplatten 4. Von der Luftwechsel-Konditioniervorrichtung 3 führt ein Schlauch 14 nach unten in den Bodenbereich und endet mit dem Zulufteintritt 6. Unter der Entlüftungsvorrichtung 7 ist im Deckenbereich die Ableitung der Abluft sichtbar.

Der Rahmenaufbau 1 ist in Fig. 3 wiedergegeben mit den Wand-Rahmenteilen 10, Seitenwände und Verstärkung der Rückwand und mit dem Boden-Rahmenteil 8 und dem Decken-Rahmenteil 9.

Fig.4 zeigt die Draufsicht auf den Gewächsraum mit der Luftwechsel-Konditioniervorrichtung 3, der elektrischen Einrichtung 13 für die Lichtquelle 2 und der Entlüftungsvorrichtung 7 nebeneinander auf der Verkleidungsplatte 4 des Decken-Rahmenteiles 9.

Bei entferntem Decken-Rahmenteil 9 sind die Verkleidungsplatten 4 mit den im Innenraum aufgestellten und an den Wänden angeordneten Gewächsbehälter 15 in Fig. 5 sichtbar.

Beim waagerechten Schnitt über dem Boden des Gewächsraumes sind in Fig. 6 die vier Wand-Rahmenteile 10 mit den Verkleidungsplatten 4 und die Verkleidungsplatte 4 am Boden gezeigt.

Die Draufsicht in Fig. 7 auf den Boden-Rahmenteil 8 zeigt die für den Boden notwendigen Verstärkungen, die der Belastung durch Pflanzbehälter 15 und durch begehen und befahren, besonders bei großen Bauformen standhalten müssen.

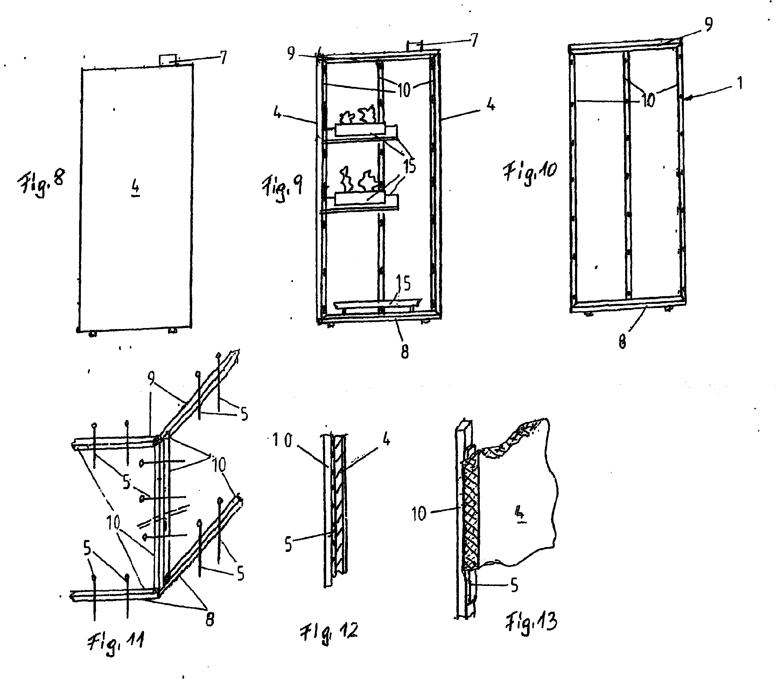

Fig. 8 zeigt die Seitenansicht des Gewächsraumes mit Verkleidungsplatte 4 und auf der oberen Abdeckung die Entlüftungsvorrichtung 7.

In Fig. 9 ist nach entfernen der Seitenwand das Innere des Gewächsraumes zu sehen mit den an einer Seitenwand angebrachten und einem auf dem Boden befindlichen Pflanzbehälter 15. Auf dem Decken-Rahmeneil 9 ist die Entlüftungsvorrichtung 7 sichtbar. Weiters sind der Boden-Rahmenteil 8 und die Wand-Rahmenteile 10 mit den Verkleidungsplatten 4 wiedergegeben.

Fig. 10 gibt den Rahmenaufbau des Gewächsraumes von der Seite wieder mit dem Decken-Rahmenteil 9, den Boden-Rahmenteil 8 und zwei Wand-rahmenteile 10 und die Verstärkung des Dritten.

Fig. 11 zeigt den Rahmenaufbau des Gewächsraumes an einer Eck-Teilansicht, in der die Verbindung mit lösbaren Verbindungsmitteln, wie Schrauben zwischen dem Boden-Rahmenteil 8, sowie dem Decken-Rahmenteil 9 mit den beiden anstoßenden Wand-Rahmenteilen 10 wiedergegeben ist.

In Fig. 12 ist ein stehendes Formrohr eines Wand-Rahmenteiles 10 mit einer Verkleidungsplatte 4 im Schnitt gezeigt, mit einer Klebung als lösbares Verbindungsmittel 5 dazwischen.

In Fig. 13 ist ein stehendes Formrohr eines Wand-Rahmenteiles in Schrägansicht mit einem Stück einer Verkleidungsplatte 4 in Schnittansicht mit einem Dopel-Klebeband, als lösbares Verbindungsmittel 5, angeklebt.

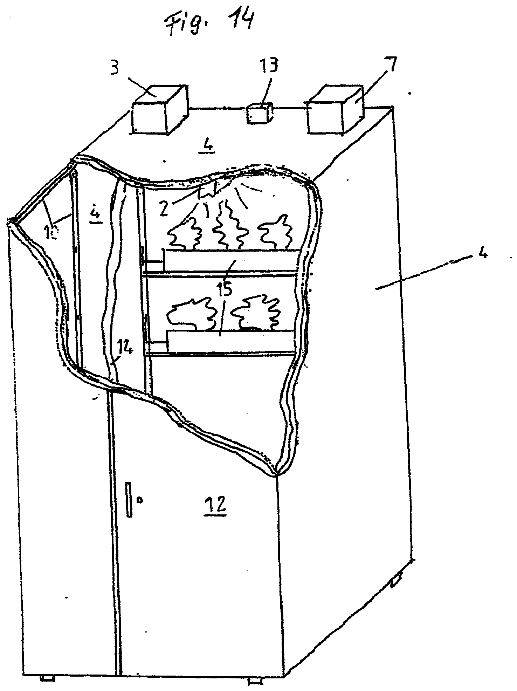

Fig. 14 zeigt die Schrägansicht des Gewächsraumes, an der vorderen rechten Ecke aufgerissen, mit der Pflanzbehälter 15 an der Rückwand übereinander zu sehen sind, die am zugeordneten Wandrahmenteil befestigt sind und dn Wandrahmenteil 10 links und den herabgeführten Schlauch 14 für den Lufteintritt, sowie die Verkleidungsplatten 4 und die Zugangstüre 12 und auf der Verkleidungsplatte 4 der Decke die Luftwechsel-Konditioniervorrichtung 3, die elektrische Einrichtung der Lichtquelle 2 und die Entlüftungsvorrichtung.

### Bezugszeichenliste

- 1: Rahmenaufbau des Gewächsraumes
- 2: Lichtquelle
- 3: Luftwechsel-Konditioniervorrichtung
- 4: Verkleidungsplatte
- 5: lösbaress Verbindungsmittel
- 6: Zulufteintritt aus der Luftwechsel-Konditionier-Vorrichtung 3
- 7: Entlüftungsvorrichtung
- 8: Boden-Rahmenteil des Rahmenaufbaues 1
- 9: Decken-Rahmenteil des Rahmenaufbaues 1
- 10: Wand-Rahmenteil des Rahmenaufbaues 1
- 11: Doppelseiten-Klebeband für die Verkleidungsplatten 4
- 12: Zugangstüre des Gewächsraumes
- 13: elektrische Einrichtung der Lichtquelle 2
- 14: Schlauch des Lufteintrittes 6
- 15: Pflanz-Regal oder Pflanz-Behälter

## Patentansprüche

1. Gewächsraum für Pflanzen allseitig geschlossen mit einem Rahmenaufbau (1) aus verschweißten Formrohr-Rahmenteilen (8, 9, 10) mit einer von außen angebrachten allseitig abdeckenden Verkleidung aus Verkleidungsplatten (4) und mit einer Zugangstüre (12) versehen und ausgestattet mit einer gesteuerten Lichtquelle (2) und einer geregelten Luftwechsel-Konditioniervorrichtung (3) angeordnet in einer für die Belichtung und Belüftung geeigneten Lage, bei dem der Rahmenaufbau (1) aus wenigstens einem Boden-Rahmenteil (8), einem Decken-Rahmenteil (9) und vier mit einfachen Seiten-Rahmenteilen (10) besteht, die miteinander mit einfach wieder lösbaren Verbindungsmitteln (5), wie etwa Schrauben, zusammengebaut sind und mit einer seitenweisen Abdeckung mit Verkleidungsplatten (4), bestehend aus Dämmplatten mit Metallummantelung, die untereinander mit eingebauten Verbindungseinrichtungen dicht zusammenfügbar sind und den Gewächsraum gegen Außenlicht abdecken und der Zulufteintritt (6) der Luftwechsel-Konditioniervorrichtung (3) im Bodenbereich und die Luftableitung mit der Entlüftungsvorrichtung (7) im Deckenbereich des Gewächsraumes angeordnet ist und ektronische Sensoren für Leuchtdichte, Lufttemperatur, Luftfeuchtigkeit und den CO₂-Gehalt der Luft zur Steuerung der Lichtquelle (2) und zur Regelung der Luftwechsel-Konditioniervorrichtung (3) in diesem angeordnet sind, die Luftwechsel-Konditioniervorrichtung (3), die elektrische Einrichtung (13) der Lichtquelle (2) und die Entlüftungsvorrichtung (7) auf dem Decken-Rahmenteil (9) des Gewächsraumes oder an einer der Seitenwand-Rahmenteil (10) angebracht sind und nach Wegnahme der Abdeckung mit den Verkleidungsplatten (4) eines Seitenwand-Rahmenteiles (10) mit oder auch ohne dem Seitenwand-Rahmenteil (10) ein Gewächsraum gleicher Baugröße modulartig anfügbar ist.

2. Gewächsraum nach Anspruch 1, **dadurch gekennzeichnet, dass** der Boden direkt mit auf einem Betonfundament oder innen auf dem Boden-Rahmenteil (8) angebrachten Verkleidungsplatten (4) abgedeckt ist.

3. Gewächsraum nach Anspruch 1, **dadurch gekennzeichnet, dass** die Lichtquelle (2) aus einer LED- oder Natriumdampflampen-Leuchtenanordnung besteht, die am Decken-Rahmenteil (9) des Gewächsraumes angebracht ist, deren Abstand zum Pflanzenbewuchs durch den Ort und Höhe des Anbringungsortes einstellbar ist und überdies damit und mit der Leuchtdauer und der Leuchtdichte, diese mit einer programmierbaren Schaltung auf die gezogene Pflanzenart einstellbar ist.

4. Gewächsraum nach Anspruch 1, **dadurch gekennzeichnet, dass** die Luftwechsel-Konditioniervorrichtung (3) Einrichtungen zur Förderung, Erwärmung, Kühlung, Be- und Entfeuchtung umfasst und der Lufteintritt (6) im Bodenbereich des Gewächsraumes über einen Schlauch (12) oder ein Rohr und die Luftableitung über eine Entlüftungsvorrichtung (7) im Deckenbereich des Gewächsraumes erfolgt.

5. Gewächsraum nach einem der Ansprüche 1, 3 und 4 **dadurch gekennzeichnet, dass** die programmierbare Schaltung der Lichtquelle (2) mit wenigstens einem Sensor zu Messung der Leuchtdichte und die Luftwechsel-Konditioniervorrichtung (3) mit jeweils einem Temperatursensor am Zulufteintritt (6) und an der Entlüftungseinrichtung (7) und mit jeweils einem Luftfeuchtigkeitssensor und jeweils einem CO₂-Sensor an diesen Stellen versehen sind.

6. Gewächsraum nach Anspruch 1, **dadurch gekennzeichnet, dass** Fugen zwischen den Verkleidungsplatten (4) mit aufgetragener Dichtmasse oder Dichtungsbändern abgedichtet sind und Zugangstüre (12) und Installationsdurchführungen mit Dichtungen verschließbar sind.
